# EUROPEAN PATENT SPECIFICATION

(11) **EP 1 875 631 B1**
(45) Date of publication and mention of the grant of the patent: **05.05.2010**
(21) Application number: 06738746.4
(22) Date of filing: 17.03.2006
(51) Int. Cl.: H04B 7/04, H04B 7/06

(54) **FLEXIBLE MULTI-SECTOR MULTIPLE ANTENNA SYSTEM**
FLEXIBLES MEHRSEKTOR-MEHRANTENNENSYSTEM
SYSTEME A ANTENNES MULTIPLES MULTI-SECTEUR FLEXIBLE

(30) Priority: 18.04.2005 US 108323
(43) Date of publication of application: 09.01.2008
(73) Proprietor: TELEFONAKTIEBOLAGET LM ERICSSON (publ), 164 83 Stockholm (SE)
(72) Inventor: VANNITHAMBY, Rath, Portland, OR 97229 (US); SAVAS, Alpaslan, San Diego, California 92126 (US); YOON, Young, San Diego, California 92122 (US)
(74) Representative: Tonscheidt, Andreas
(86) International application number: PCT/US2006/009722
(87) International publication number: WO 2006/113009

(56) References cited:
- WO-A-99/21391
- WO-A-2004/093416
- US-A1- 2003 092 379
- US-B1- 6 748 216

## Description

### BACKGROUND OF THE INVENTION

The present invention relates generally to multiple input, multiple output (MIMO) systems and, more particularly, to a multi-sector MIMO system for a high speed packet data channel.

The demand for wireless data services, such as mobile Internet, video streaming, and voice over IP, have led to the development of high speed packet data channels to provide high data rates needed for such services. Revision C of the IS-200 standard introduced the forward packet data channel (F-PDCH) for high speed packet data services. The F-PDCH takes advantage of multi-user diversity by opportunistically scheduling users to receive data on the forward packet data channel when the channel conditions are favorable. Subject to predefined fairness criteria, the throughput is maximized if all forward link resources, such as Walsh codes and power, are allocated to the mobile station with the best channel conditions and, hence, the highest supportable data rate. In general, a mobile station receives data only in good radio conditions. The mobile stations transmit channel quality information over reverse link overhead channels. This channel quality information is used at the base station to schedule the mobile stations and to select the most efficient modulation and coding scheme.

WO 2004/093416 shows a multi-sector antenna apparatus for packet-by-packet transmission. The transmission of each packet is carried out via an independently selected directional antenna sector. The direction of transmission and the corresponding directional antenna sector is selected responsive to the direction in which the best electromagnetic was received using a plurality of criteria.

Currently, use of high speed forward packet data channels has been limited to systems with a single transmit antenna. Multiple input, multiple output (MIMO) communication systems that employ communication links with multiple transmit and receive antennas can achieve significantly higher data rates and/or increase reliability. These gains are realized by exploiting spatial multiplexing in which data is multiplexed across the transmit antennas.

### SUMMARY OF THE INVENTION

The present invention relates to the transmission of packet data from one or more sectors in a radio access network to a plurality of mobile stations over a shared forward link channel, such as the Forward Packet Data Channel (F-PDCG) in IS-2000 systems and the High Speed downlink Shared Channel (HS-DSCH) in HSDPA systems. Each sector has a sector transmitter and multiple sector antennas. The sector transmitter may, for example, comprise a spatial multiplexing transmitter that divides a data stream for a mobile station into two or more substreams for transmission to the mobile station from respective antennas. A scheduler in each sector selects one or more mobile stations to receive packet data from the base station at any one time based on a predetermined scheduling criteria. In one embodiment, the scheduler selects one or more mobile stations to serve at any one time so as to maximize data throughput. The scheduler may also take into account fairness criteria, quality of service, or other factors. A selected mobile station may be served by all of the sector transmitters in the serving sector, or by less than all of the sector transmitters in the serving sector. If less than all the sector transmitters in the serving sector are used to transmit data to a selected mobile station, the scheduler determines the best combination of antennas to use.

Sector antennas may be dynamically and temporarily reassigned from one sector to another. Reassignment of a sector antenna from one sector to another may be appropriate, for example, where the channel conditions between a mobile station in a boundary region between sectors are favorable. A sector antenna may also be reassigned when the loading of cross sectors is unbalanced. In one embodiment of the invention, an antenna management processor at the base station handles the reassignment of sector antennas.

### BRIEF DESCRIPTION OF THE DRAWINGS

Fig. 1 is a block diagram illustrating components of an exemplary mobile communication network.
Fig. 2 is a schematic diagram illustrating a multi-sector cell in the mobile communication network, wherein each sector has multiple transmit antennas.
Fig. 3 is a block diagram illustrating relevant portions of a base station for a mobile communication network.
Fig. 4 is a schematic diagram illustrating one scenario in which an antenna in one sector is reassigned to another sector.
Fig. 5 is a schematic diagram illustrating another scenario in which an antenna in one sector is reassigned to another sector.
Fig. 6 is a schematic diagram illustrating combined transmit diversity and spatial multiplexing in one embodiment of the invention.

### DETAILED DESCRIPTION OF THE INVENTION

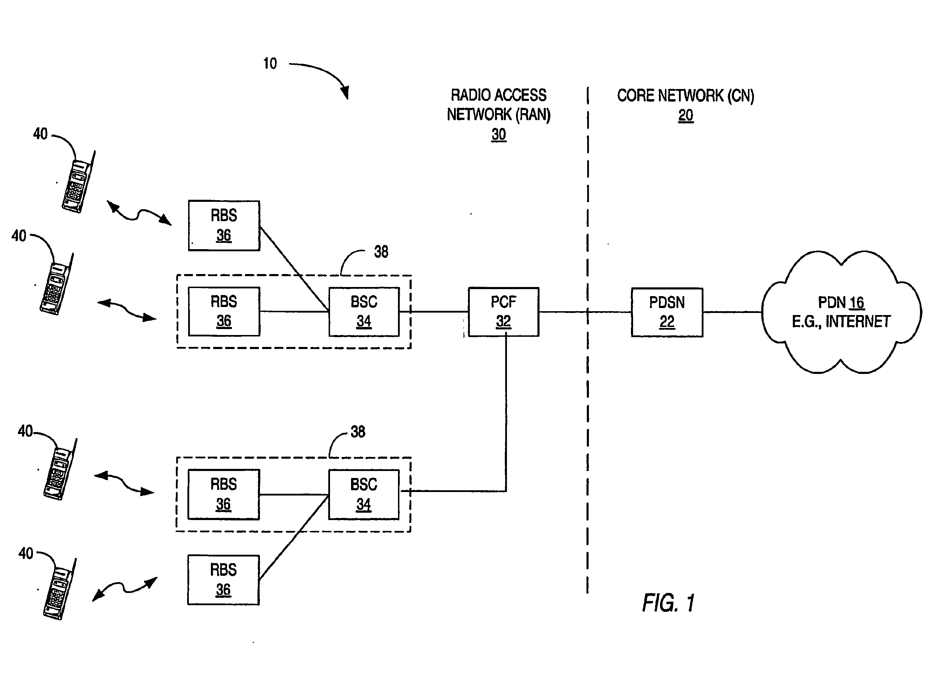

Figure 1 illustrates logical entities of an exemplary wireless communication network 10 that provides packet data services to mobile stations 40. Fig. 1 illustrates a wireless communication network 10 configured according to the cdma2000 (IS2000) standards. Other standards, including Wideband CDMA (W-CDMA) could also be employed. The wireless communication network 10 is a packet-switched network that employs a high-speed forward packet data channel (F-PDCH) to transmit data to the mobile stations. Wireless communication network 10 comprises a packet-switched core network 20 and a radio access network (RAN) 30. The core network 20 includes a Packet Data Serving Node (PDSN) 22 that connects to an external packet data network (PDN) 16, such as the Internet, and supports PPP connections to and from the mobile station 40. Core network 20 adds and removes IP streams to and from the RAN 30 and routes packets between the external packet data network 16 and the RAN 30.

RAN 30 connects to the core network 20 and gives mobile stations 40 access to the core network 20. RAN 30 includes a Packet Control Function (PCF) 32, one or more base station controllers (BSCs) 34 and one or more radio base stations (RBSs) 36. The primary function of the PCF 32 is to establish, maintain, and terminate connections to the PDSN 22. The BSCs 34 manage the radio resources within their respective coverage areas. The RBSs 36 include the radio equipment for communicating over the air interface with mobile stations 40. A BSC 34 can manage more than one RBSs 36. In cdma2000 networks, a BSC 34 and an RBS 36 comprise a base station 38. The BSC 34 is the control part of the base station 38. The RBS 36 is the part of the base station 38 that includes the radio equipment and is normally associated with a cell site. In cdma2000 networks, a single BSC 34 may comprise the control part of multiple base stations 38. In other network architectures based on other standards, the network components comprising the base station 38 may be different but the overall functionality will be the same or similar.

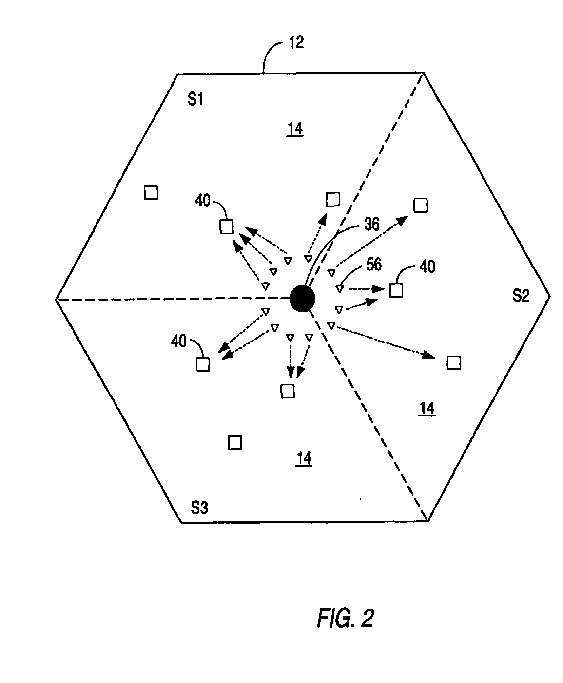

Referring to Fig. 2, each RBS 36 is located in and provides service to mobile stations 40 in a geographic region referred to as a cell 12. The cell 12 is divided into sectors 14 to reduce interference. The individual sectors 14 are denominated by S1, S2 and S3 respectively in Fig. 2. In Fig. 2, the RBS 36 is located near the center of the cell 12 though other arrangements are possible.

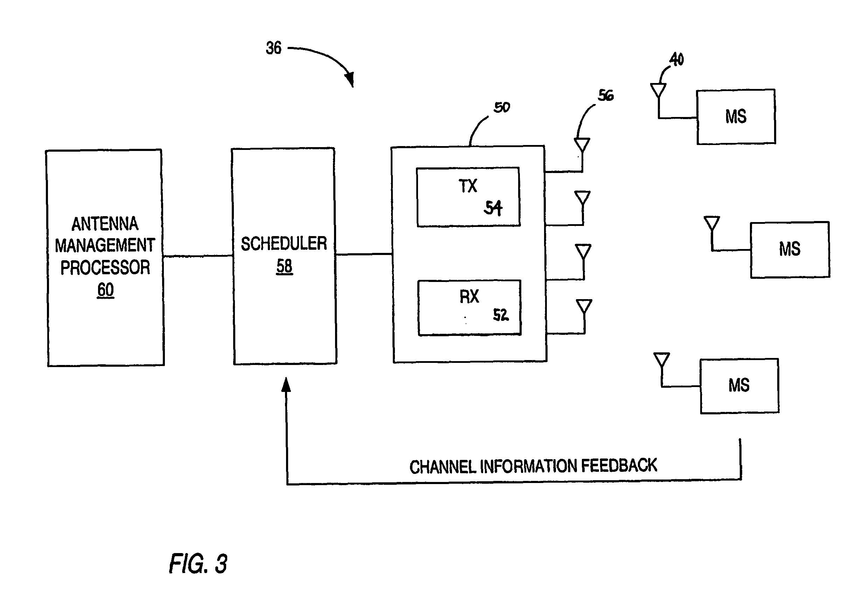

Fig. 3 illustrates components in one sector 14 of the RBS 36. The RBS 36 includes a sector transceiver 50 having a plurality of sector antenna 56, a scheduler 58, and an antenna management processor 60. The transceiver transmits signals to and receives signals from mobile stations 40 in the sector 14. Each sector 14 includes multiple sector antennas 56. The scheduler 58 schedules packet data transmissions from each sector antenna 56. The scheduler 58 may employ any predetermined scheduling criteria. In one embodiment, the scheduler 58 schedules mobile stations to maximize data throughput. In other embodiments, the scheduler 58 may take into account other factors such as quality of service and fairness. An example of a scheduler 58 that incorporates a fairness criteria is a proportionally fair scheduler. The antenna management circuit 60 determines the number of sector antennas 56 assigned to the sector 14, which the sector transceiver 50 can use.

In the exemplary embodiment shown in Fig. 3, the transceiver 50 comprises a receiver 52 and a spatial multiplexing transmitter 54. The spatial multiplexing transmitter 54 may comprises, for example, a per antenna rate control (PARC) transmitter. The spatial multiplexing transmitter 54 divides a data stream for a given mobile station 40 into multiple substreams and transmits each substream to the mobile station 40 using a different sector antenna 56 for each substream.

The spatial multiplexing transmitter 54 is used in the exemplary embodiment to transmit packet data to the mobile stations 40 over a high-speed packet data channel, such as the forward packet data channel (F-PDCH) in cdma2000 systems. The scheduler 58 takes advantage of multi-user diversity to increase system throughput by opportunistically scheduling mobile stations 40 to receive data on the forward packet data channel when the channel conditions are favorable. Subject to predefined fairness criteria, the throughput is maximized if all forward link resources, such as Walsh codes and power, are allocated to the mobile station 40 with the best channel conditions and, hence, the highest supportable data rate. In general, a mobile station 40 receives data only in good radio conditions. The mobile stations 40 transmit channel quality information over reverse link overhead channels to the RBS 36. The scheduler 58 at the RBS 36 uses this channel quality information to schedule the mobile stations 40 and to select the most efficient modulation and coding scheme.

In a multi-antenna system, allocating all of the antennas to a single mobile station 40 at any one time does not exploit the degrees of freedom in the channel. If the scheduler 58 is constrained to select a single mobile station 40 to be served by all sector antennas 56 at any time, it is possible that the channel conditions between the selected mobile station 40 and one or more of the sector antennas 56 will not be favorable even if the selected mobile station 40 is the one with the best average channel conditions. When the number of users is large, further improvements in throughput can be achieved by allowing the RBS 36 to transmit to more than one mobile station 40 at any one time and using a technique referred to herein as antenna selection. With antenna selection, the scheduler 58 may choose to serve a mobile station 40 with less than all of the sector antennas 56. The scheduler 58 chooses the sector antennas 56 with the best channel conditions to the mobile station 40. One interpretation of best is the sector antennas 56 that can support the highest data rate. Any remaining sector antennas 56 can then be used to serve another mobile station 40. With M sector antennas 56, up to M mobile stations 40 can be served simultaneously.

When antenna selection is employed, the scheduler 58, must determine which mobile stations 40 to serve at any one time, the number of sector antennas 56 to use for each of the selected mobile stations 40, and which sector antennas 56 to use for transmission to each of the selected mobile stations 40. If all of the decisions are made at the scheduler 58, the mobile stations 40 need to feedback channel information for the propagation channel between each transmit antenna at the RBS 36 and each receive antenna at the mobile station 40. The channel information feedback may include the signal to interference plus noise ratio (SINR) of the propagation channel, channel quality indicator (CQI), channel coefficients, or rate indicator.

In some embodiments, part of the antenna selection process can be performed by the mobile station 30 to reduce the amount of channel information feedback that is required. The antenna selection process may be broken down into two steps. In the first step, the number of sector antennas 56 to use for transmission, referred to herein as the mode, is selected for the mobile station 40. In the subsequent discussion, the selected mode is denoted by the notation mode-N, where N refers to the number of sector antennas 56 selected for transmission to the mobile station 40. In the second step, the particular sector antennas 56 that will be used are selected.

In a first divided approach to antenna selection, the mobile station 40 estimates the *SINR*s for all possible antenna combinations for each mode and chooses an antenna combination for each possible mode that results in the maximum sum data rate. The scheduler 58 at the RBS 36 selects which mobile stations 40 to serve and the mode based on the channel information feedback. In this approach, the mobile station 40 needs to feed back channel information for the propagation channels corresponding to the selected sector antenna(s) 56 in each mode. The feedback may comprises a channel quality indicator (CQI) or rate indicator. In the example of M = 4 transmit antennas, the feedback load would be 1 CQI for mode-1, 2 CQIs for mode-2, 3 CQIs for mode-3, and 4 CQIs for mode-4, resulting in a total of 10 CQIs.

In a second divided approach to antenna selection, the mobile station 40 estimates the *SINR*s for all possible antenna combinations and selects the best antenna combination for the best mode. It then feeds back a CQI or rate indicator for each selected sector antenna 56, i.e., if mode-N is selected, then N CQIs are fed back. It also needs to signal the antenna selection from the 2^{M}-1 possibilities, which may require M bits.

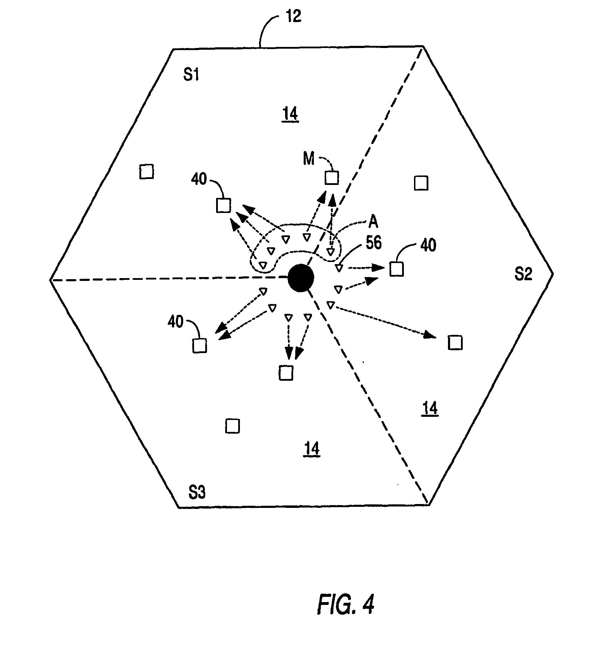

In one exemplary embodiment, further improvements in system throughput can be attained by extending the antenna selection concept to include sector antennas 56 in other sectors 14 when the mobile station is in soft or softer hand-off. Referring to Figure 4, a mobile station 40 designated by the letter M is in a first sector S1 near the boundary with second sector S2. In this example, it is assumed that the mobile station M is currently being served by sector S1. It is further assumed in this example that the channel conditions between mobile station M and sector antenna 56 designated by the letter A located in sector S2 are very favorable. In this scenario, mobile station M may report the favorable channel conditions between antenna A in sector S2 and mobile station M to the RBS 36. This can be done by feeding back channel information for the propagation channel between antenna A and mobile station M, or by means of a request by mobile station M to be served by antenna A. The RBS 36 may elect to reassign antenna A from sector S2 to sector S1 due to the favorable channel conditions to improve system throughput as indicated by dotted lines in Fig. 4. Thus, the number of available antennas in sector S2 decreases from 4 to 3, and the number of sector antennas 56 in sector S1 increases from 4 to 5.

In one embodiment of the invention, the RBS 36 includes a centralized antenna management processor 60 for all sectors 14. The antenna management processor 60 reassigns sector antennas 56 between sectors 14. The antenna management processor 60 may be implemented in one or more programmable processors. A centralized antenna management processor 60 could also be located at the BSC 34 and may support sectors 14 at more than one RBS 36. Locating the antenna management processor at the BSC 34 allows reassignment of sector antennas 56 between sectors 14 in different cells 12. In yet other embodiments, a distributed approach could be taken in which an antenna management processor 60 is located in each sector 14, and the separate antenna management processors 60 coordinate their actions by signaling between sectors 14.

The antenna management processor 60 determines the assignment of sector antennas 56 based on factors such as current channel conditions, sector loading, net impact on throughput, etc. For example, the antenna management processor 60 may reassign a sector antenna 56 from one sector 14 to another if the antenna management processor 60 determines that reassignment will result in an increase in overall system capacity. When the antenna management processor 60 decides to reassign a sector antenna 56 from one sector 14 to another, it notifies the schedulers 58 in the affected sectors 14. This embodiment involves minimal change to the scheduler 58. The schedulers 58 operate as previously described, except for a change in the number of possible antenna combinations to be considered.

In other embodiments of the invention, a mobile station 40 in soft or softer handoff may be requested to report channel conditions between the mobile station 40 and sector antennas 56 in one or more sectors 14. The mobile station 40 may report the channel conditions to the scheduler 58 in one sector 14. In this embodiment, the scheduler 58 serving the mobile station 40 may request temporary reassignment of a sector antenna 56 from another sector 14 if doing so is advantageous. For example, the scheduler 58 could request reassignment of a sector antenna 56 if the reassignment would improve sector throughput. The antenna management processor 60 could balance the expected increase in throughput of the target sector 14, i.e., the sector gaining a sector antenna 56, against any decrease in throughput from the source sector, i.e., the sector losing a sector antenna 56.

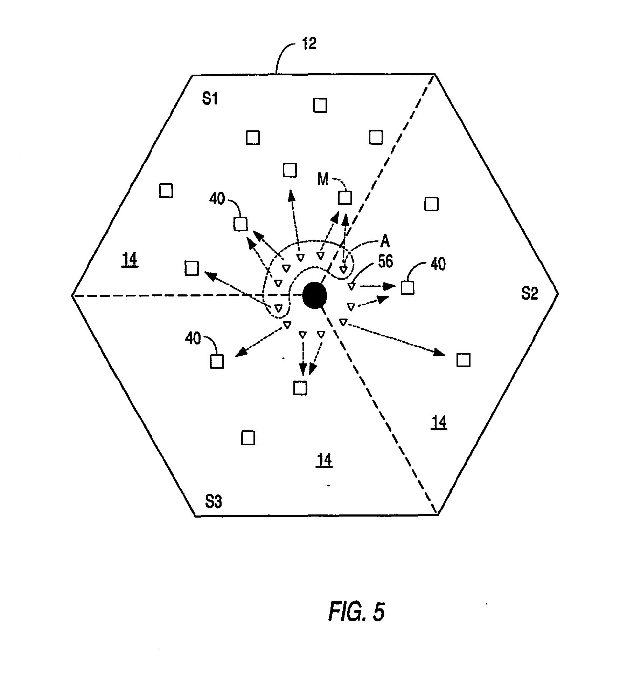

The antenna management processor 60 may also decide to reassign a sector antenna 56 for reasons other than improving system throughput. Fig. 5 illustrates a scenario where the load across sectors 14 is unbalanced. In Fig. 5, the sector 14 designated by S1 is heavily loaded while sectors S2 and S3 are lightly loaded. In this scenario, the antenna management processor 60 may reassign one or more sector antennas 56 to achieve load balancing. If one sector 14 is heavily loaded and another sector 14 is lightly loaded, the antenna management processor 60 may reassign a sector antenna 56 from the lightly-loaded sectors 14 to the heavily-loaded sector. The reassignment of the sector antenna 56 to the heavily-loaded sector increases the throughput of the heavily-loaded sector, thereby enabling the heavily-loaded sector to serve more users. In Fig. 5, two sector antennas 56 are shown being reassigned, one from sector S2 and one from sector S3.

The present invention provides better opportunistic scheduling of mobile stations by allowing concurrent transmissions to two or more mobile stations 40 and by using antenna selection in the scheduling process. Further, the present invention achieves higher system throughput by allowing antennas in one sector to be temporarily reassigned to a different sector. Such reassignment may be done because of favorable channel conditions between the reassigned sector antenna 56 and a mobile station 40 in a different sector 56. Also, reassignment may be employed as one means of balancing the load across all sectors 14.

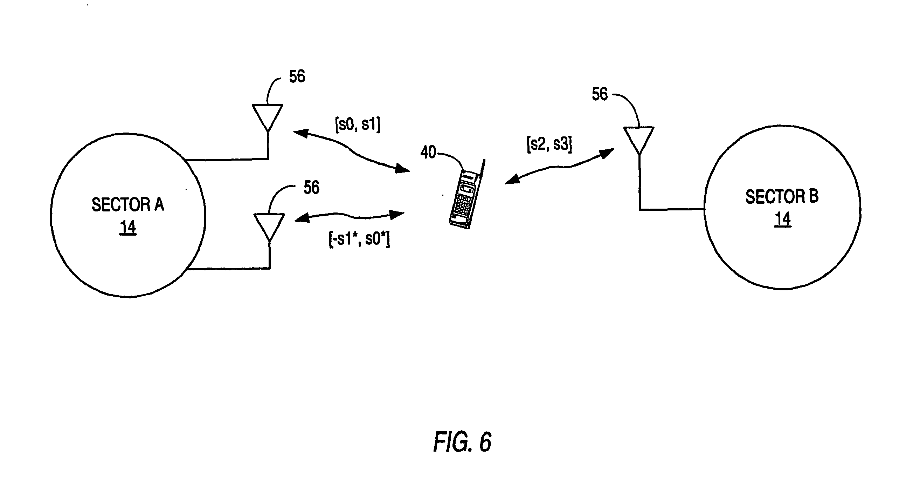

The present invention can be also used in combination with a transmit diversity scheme as shown in Fig. 6. As shown in Fig. 6, a mobile station 40 is in communication with two sectors 14 denoted as Sector A and Sector B. Sectors A and B may be served by the same base station (i.e. softer handoff) or by different base stations (soft handoff). Two sector antennas 56 are selected from Sector A and one sector antenna is selected from Sector B. The two selected sector antennas 56 in Sector A transmit symbols s0 and s1 using a space-time code, such as the well-known Alamouti code. In a first transmit period, the two sector antennas 56 in Sector A transmit symbols s0 and -s1* respectively. Sector antenna 56 in Sector B transmits symbol s2. In a second transmit period, the two sector antennas 56 in Sector A transmit symbols s1 and s0* respectively, while sector antenna 56 for Sector B transmits symbol s3. The use of transmit diversity in Sector A may enhance the reliability of the symbols from Sector A, due to increased diversity order. This diversity gain may be useful in sectors 14 that have relatively low average SNR.

In the embodiment shown in Fig. 6, there may be one or more additional sector antennas 56 in either Sector A and/or Sector B communicating with the mobile station 40. For example, a second sector antenna in Sector B or a third sector antenna in Sector A may transmit symbols s4 and s5 to the mobile station 40 in the first and second symbol periods respectively. As previously described, sector antennas 56 may be reassigned from one sector 14 to another 14 depending on channel conditions and/or sector loading.

The present invention may, of course, be carried out in other specific ways than those herein set forth without departing from the scope of protection as defined by the appended claims.

## Claims

1. A radio access network (30) including multiple sectors (14) comprising:
two or more sector transmitters (54) serving respective sectors for transmitting data to mobile stations;
a plurality of antennas (56), each antenna assigned to a respective sector transmitter; and
an antenna management processor (60) controlling sector antenna assignments and operative to dynamically reassign a sector antenna associated with a sector transmitter in a first sector to a sector transmitter in a second sector.

2. The radio access network of claim 1 wherein said sector transmitters use multiple sector antennas to transmit packet data to a plurality of mobile stations over a shared packet data channel.

3. The radio access network of claim 2 wherein said sector transmitter includes a multiplexer for dividing a data stream for a selected mobile station into a plurality of substreams to be transmitted over different sector antennas.

4. The radio access network of claim 3 wherein at least one of said plurality of substreams is transmitted from two or more sector antennas.

5. The radio access network of claim 2 further comprising a scheduler (58) associated with each sector transmitter to schedule packet data transmissions from the assigned sector antennas to a plurality of mobile stations over said shared packet data channel.

6. The radio access network of 5 wherein the scheduler jointly schedules the sector antennas.

7. The radio access network of claim 5 wherein said scheduler schedules all assigned sector antennas together as a unit so that at any given time only one mobile station receives packet data transmissions over the packet data channel of all sector antennas assigned to a sector.

8. The radio access network of claim 5 wherein said scheduler is operative to schedule less than all the assigned sector antennas to a first mobile station, and the remaining sector antennas to one or more other mobile stations so that two or more mobile stations can concurrently receive packet data over said packet data channel.

9. The radio access network of claim 8 wherein the scheduler independently schedules the assigned sector antennas.

10. The radio access network of claim 1 wherein the antenna management processor determines sector antenna assignment based on sector loading.

11. The radio access network of claim 1 wherein the antenna management processor determines sector antenna assignment based on channel conditions from said sector antenna and to one or more mobile stations.

12. The radio access network of claim 11 wherein the antenna management processor reassigns a sector antenna assigned to a sector transmitter in a first sector to a sector transmitter in a second sector based on a comparison of the channel conditions to mobile stations in the different sectors.

13. The radio access network of claim 12 wherein the antenna management processor reassigns a sector antenna associated with a sector transmitter in a first sector to a sector transmitter in a second sector when the channel conditions from the sector antenna to a mobile station in the second sector are determined to be more favorable than the charnel conditions to a mobile station in the first sector.

14. A method implemented in a radio access network including multiple sectors having two or more sector transmitters serving respective sectors for transmitting data to mobile stations, said method comprising:
assigning each one of a plurality of sector antennas to a respective sector transmitter; and
dynamically reassigning a sector antenna associated with a sector transmitter in a first sector to a sector transmitter in a second sector.

15. The method of claim 14 further comprising dividing data to be transmitted to a selected mobile station into two or more substreams and transmitting each substream over different sector antennas.

16. The method of claim 15 wherein at least one of said substreams is transmitted from two or more sector antennas.

17. The method of claim 15 wherein said data is transmitted over a shared packet data channel, and further comprising scheduling transmissions to said mobile stations over said shared packet data channel.

18. The method of 17 wherein scheduling transmissions to said mobile stations over said shared packet data channel comprises scheduling mobile stations to receive packet data transmissions over said shared packet data channel one at a time using all assigned sector antennas.

19. The method of 17 wherein scheduling transmissions to said mobile stations over said shared packet data channel comprises scheduling two or more mobile stations to receive packet data transmissions over said packet data channel at one time.

20. The method of claim 19 further comprising selecting sector antennas for transmitting data to each mobile station.

21. The method of claim 20 wherein selecting sector antennas for transmitting data to each mobile station comprises independently scheduling each sector antenna.

22. The method of claim 20 wherein selecting sector antennas for transmitting data to each mobile station comprises jointly scheduling said sector antennas.

23. The method of claim 14 wherein dynamically reassigning a sector antenna associated with a sector transmitter in a first sector to a sector transmitter in a second sector comprises determining sector antenna assignment based on sector loading.

24. The method of claim 14 wherein dynamically reassigning a sector antenna comprises determining sector antenna assignment based on channel conditions between said sector antennas and said mobile stations.

25. The method of claim 24 wherein determining sector antenna assignment based on channel conditions between said sector antennas and said mobile stations comprises comparing channel conditions between a sector antenna and mobile stations in two or more sectors.

26. The method of claim 25 wherein dynamically reassigning a sector antenna comprises reassigning a sector antenna associated with a sector transmitter in a first sector to a sector transmitter in a second sector when the channel conditions from the sector antenna to a mobile station in the second sector are determined to be more favorable than the channel conditions to a mobile station in the first sector.

## Patentansprüche

1. Funkzugangsnetz (30), umfassend mehrere Sektoren (14), aufweisend:
zwei oder mehr Sektorensender (54), die jeweilige Sektoren versorgen, zum Senden von Daten an Mobilstationen;
eine Mehrzahl von Antennen (56), wobei jede Antenne einem jeweiligen Sektorensender zugeordnet ist;
und
einen Antennenverwaltungsprozessor (60), der Sektorenantennenzuordnungen steuert und so funktioniert, dass er eine Sektorenantenne, die mit einem Sektorensender in einem ersten Sektor assoziiert ist, einem Sektorensender in einem zweiten Sektor dynamisch neu zuordnet.

2. Funkzugangsnetz nach Anspruch 1, wobei die Sektorensender mehrere Sektorenantennen verwenden, um Paketdaten über einen gemeinsam benutzten Paketdatenkanal an eine Mehrzahl von Mobilstationen zu senden.

3. Funkzugangsnetz nach Anspruch 2, wobei der Sektorensender einen Multiplexer zum Teilen eines Datenstroms für eine ausgewählte Mobilstation in eine Mehrzahl von Teilströmen umfasst, die über verschiedenen Sektorenantennen zu senden sind.

4. Funkzugangsnetz nach Anspruch 3, wobei wenigstens einer der Mehrzahl von Teilströmen von zwei oder mehr Sektorenantennen gesendet wird.

5. Funkzugangsnetz nach Anspruch 2, ferner umfassend einen Scheduler (58), der mit jedem Sektorensender assoziiert ist, um Paketdatenübertragungen von zugeordneten Sektorantennen an eine Mehrzahl von Mobilstationen über den gemeinsam benutzten Paketdatenkanal zu disponieren.

6. Funkzugangsnetz nach Anspruch 5, wobei der Scheduler die Sektorenantennen gemeinsam disponiert.

7. Funkzugangsnetz nach Anspruch 5, wobei der Scheduler alle zugeordneten Sektorenantennen zusammen als eine Einheit disponiert, so dass zu einem bestimmten Zeit nur eine Mobilstation Paketdatenübertragungen über den Paketdatenkanal aller Sektorenantennen empfängt, die einem Sektor zugeordnet sind.

8. Funkzugangsnetz nach Anspruch 5, wobei der scheduler so funktioniert, dass er weniger als alle zugeordneten Sektorenantennen für eine erste Mobilstation und die restlichen Sektorenantennen für eine oder mehr andere Mobilstationen disponiert, so dass zwei oder mehr Mobilstationen gleichzeitig Paketdaten über den Paketdatenkanal empfangen können.

9. Funkzugangsnetz nach Anspruch 8, wobei der Scheduler die zugeordneten Sektorenantennen unabhängig disponiert.

10. Funkzugangsnetz nach Anspruch 1, wobei der Antennenverwaltungsprozessor Sektorenantennenzuordnung auf der Basis von Sektorenlast bestimmt.

11. Funkzugangsnetz nach Anspruch 1, wobei der Antennenverwaltungsprozessor Sektorenantennenzuordnung auf der Basis von Kanalbedingungen von der Sektorenantenne und zu einer oder mehreren Mobilstationen bestimmt.

12. Funkzugangsnetz nach Anspruch 11, wobei der Antennenverwaltungsprozessor eine Sektorenantenne, die einem Sektorensender in einem ersten Sektor zugeordnet ist, einem Sektorensender in einem zweiten Sektor auf der Basis eines Vergleichs der Kanalbedingungen zu Mobilstationen in den verschiedenen Sektoren neu zuordnet.

13. Funkzugangsnetz nach Anspruch 12, wobei der Antennenverwaltungsprozessor eine Sektorenantenne, die mit einem Sektorensender in einem ersten Sektor assoziiert ist, einem Sektorensender in einem zweiten Sektor neu zuordnet, wenn bestimmt wird, dass die Kanalbedingungen von der Sektorenantenne zu einer Mobilstation im zweiten Sektor günstiger als die Kanalbedingungen zu einer Mobilstation im ersten Sektor sind.

14. Verfahren, implementiert in einem Funkzugangsnetz, umfassend mehrere Sektoren mit zwei oder mehr Sektorensendern, die jeweilige Sektoren versorgen, zum Senden von Daten an Mobilstationen, wobei das Verfahren umfasst:
Zuordnen jeder einer Mehrzahl von sektorenantennen zu einem jeweiligen Sektorensender; und
dynamisches Neuzuordnen einer Sektorenantenne, die mit einem Sektorensender in einem ersten Sektor assoziiert ist, zu einem Sektorensender in einem zweiten Sektor.

15. Verfahren nach Anspruch 14, ferner umfassend ein Teilen von Daten, die an eine ausgewählte Mobilstation zu senden sind, in zwei oder mehr Teilströme und Senden jedes Teilstroms über verschiedene Sektorenantennen.

16. Verfahren nach Anspruch 15, wobei wenigstens einer der Teilströme von zwei oder mehr Sektorenantennen gesendet wird.

17. Verfahren nach Anspruch 15, wobei die Daten über einen gemeinsam benutzten Paketdatenkanal gesendet werden, und ferner umfassend ein Disponieren von Übertragungen an die Mobilstationen über den gemeinsam benutzten Paketdatenkanal.

18. Verfahren nach Anspruch 17, wobei das Disponieren von Übertragungen an die Mobilstationen über den gemeinsam benutzten Paketdatenkanal ein Disponieren von Mobilstationen umfasst, um Paketdatenübertragungen über den gemeinsam benutzten Paketdatenkanal eine nach der anderen unter Verwendung aller zugeordneten Sektorenantennen zu empfangen.

19. Verfahren nach Anspruch 17, wobei das Disponieren von Übertragungen an die Mobilstationen über den gemeinsam benutzten Paketdatenkanal ein Disponieren von zwei oder mehr Mobilstationen umfasst, um Paketdatenübertragungen über den gemeinsam benutzten Paketdatenkanal zur gleichen Zeit zu empfangen.

20. Verfahren nach Anspruch 19, ferner umfassend ein Auswählen von Sektorenantennen zum Senden von Daten an jede Mobilstation.

21. Verfahren nach Anspruch 20, wobei das Auswählen von Antennen zum Senden von Daten an jede Mobilstation ein unabhängiges Disponieren jeder Sektorenantenne umfasst.

22. Verfahren nach Anspruch 20, wobei das Auswählen von Antennen zum Senden von Daten an jede Mobilstation ein gemeinsames Disponieren der Sektorenantennen umfasst.

23. Verfahren nach Anspruch 14, wobei das dynamische Neuzuordnen einer Sektorenantenne, die mit einem Sektorensender in einem ersten Sektor assoziiert ist, zu einem Sektorensender in einem zweiten Sektor ein Bestimmen von Sektorenantennenzuordnung auf der Basis von Sektorenlast umfasst.

24. Verfahren nach Anspruch 14, wobei das dynamische Neuzuordnen einer Sektorenantenne ein Bestimmen von Sektorenantennenzuordnung auf der Basis von Kanalbedingungen zwischen den Sektorenantennen und den Mobilstationen umfasst.

25. Verfahren nach Anspruch 24, wobei das Bestimmen von Sektorenantennenzuordnung auf der Basis von Kanalbedingungen zwischen den Sektorenantennen und den Mobilstationen ein Vergleichen von Kanalbedingungen zwischen einer Sektorenantenne und Mobilstationen in zwei oder mehr Sektoren umfasst.

26. Verfahren nach Anspruch 25, wobei das dynamische Neuzuordnen einer Sektorenantenne ein Neuzuordnen einer sektorenantenne, die mit einem sektorensender in einem ersten Sektor assoziiert ist, zu einem Sektorensender in einem zweiten Sektor umfasst, wenn bestimmt wird, dass die Kanalbedingungen von der Sektorenantenne zu einer Mobilstation im zweiten Sektor günstiger als die Kanalbedingungen zu einer Mobilstation im ersten Sektor sind.

## Revendications

1. Réseau d'accès radio (30) incluant des secteurs multiples (14) comprenant:
deux ou plusieurs émetteurs de secteur (54) desservant des secteurs respectifs pour transmettre des données à des stations mobiles;
une pluralité d'antennes (56), chaque antenne étant assignée à un émetteur de secteur respectif; et
un processeur de gestion d'antenne (60) commandant des assignations d'antenne de secteur et fonctionnel afin de réassigner dynamiquement un secteur d'antenne associé à un émetteur de secteur dans un premier secteur à un émetteur de secteur dans un second secteur.

2. Réseau d'accès radio selon la revendication 1, dans lequel lesdits émetteurs de secteur utilisent des antennes de secteur multiples pour émettre des paquets de données vers une pluralité de stations mobiles via un canal de paquets de données partagé.

3. Réseau d'accès radio selon la revendication 2, dans lequel ledit émetteur de secteur inclut un multiplexeur pour diviser un flux de données destiné à une station mobile sélectionnée en une pluralité de sous-flux à transmettre via des antennes de secteur différentes.

4. Réseau d'accès radio selon la revendication 3, dans lequel au moins un de ladite pluralité de sous-flux est transmis depuis deux ou plusieurs antennes de secteur.

5. Réseau d'accès radio selon la revendication 2, comprenant en outre un programmateur (58) associé à chaque émetteur de secteur afin de programmer des transmissions de paquets de données depuis les antennes de secteur assignées vers une pluralité de stations mobiles via ledit canal de paquets de données partagé.

6. Réseau d'accès radio selon la revendication 5, dans lequel le programmateur programme conjointement les antennes de secteur.

7. Réseau d'accès radio selon la revendication 5, dans lequel ledit programmateur programme toutes les antennes de secteur assignées conjointement comme une unité de sorte que à n'importe quel moment donné seulement une station mobile reçoive des transmissions de paquets de données via le canal de paquets de données de toutes les antennes de secteur assignées à un secteur.

8. Réseau d'accès radio selon la revendication 5, dans lequel ledit programmateur est opérationnel afin de programmer moins que toutes les antennes de secteur assignées à une première station mobile, et les antennes de secteur restantes à une ou plusieurs autres stations mobiles de sorte que deux ou plusieurs stations mobiles puissent recevoir simultanément des paquets de données via ledit canal de paquets de données.

9. Réseau d'accès radio selon la revendication 8, dans lequel le programmateur programme de manière indépendante les antennes de secteur assignées.

10. Réseau d'accès radio selon la revendication 1, dans lequel le processeur de gestion d'antenne détermine une assignation d'antenne de secteur sur la base d'une charge du secteur.

11. Réseau d'accès radio selon la revendication 1, dans lequel le processeur de gestion d'antenne détermine une assignation d'antenne de secteur sur la base des conditions de canal depuis ladite antenne de secteur et vers une ou plusieurs stations mobiles.

12. Réseau d'accès radio selon la revendication 11, dans lequel le processeur de gestion d'antenne réassigne une antenne de secteur assignée à un émetteur de secteur dans un premier secteur à un émetteur de secteur dans un second secteur sur la base d'une comparaison des conditions de canal avec les stations mobiles dans les différents secteurs.

13. Réseau d'accès radio selon la revendication 12, dans lequel le processeur de gestion d'antenne réassigne une antenne de secteur associée à un émetteur de secteur dans un premier secteur à un émetteur de secteur dans une second secteur quand il est déterminé que les conditions de canal depuis l'antenne de secteur vers une station mobile dans le second secteur sont plus favorables que les conditions de canal d'une station mobile dans le premier secteur.

14. Procédé implémenté dans un réseau d'accès radio incluant des secteurs multiples comportant deux ou plusieurs émetteurs de secteur desservant des secteurs respectifs pour transmettre des données à des stations mobiles, ledit procédé comprenant les étapes consistant à;
assigner chacune d'une pluralité d'antennes de secteur à un émetteur de secteur respectif ; et
réassigner dynamiquement une antenne de secteur associée à un émetteur de secteur dans un premier secteur à un émetteur de secteur dans un second secteur.

15. Procédé selon la revendication 14, comprenant en outre la division des données à transmettre vers une station mobile sélectionnée en deux ou plusieurs sous-flux et la transmission de chaque sous-flux via des antennes de secteur différentes.

16. Procédé selon la revendication 15, dans lequel au moins un desdits sous-flux est transmis depuis deux ou plusieurs antennes de secteur.

17. Procédé selon la revendication 15, dans lequel lesdites données sont transmises via un canal de paquets de données partagé, et comprenant en outre la programmation des transmissions vers lesdites stations mobiles via ledit canal de paquets de données partagé.

18. Procédé selon la revendication 17, dans lequel la programmation des transmissions vers lesdites stations mobiles via ledit canal de paquets de données partagé comprend la programmation des stations mobiles afin de recevoir des transmissions de paquets de données via ledit canal de paquets de données partagé une à la fois en utilisant toutes les antennes de secteur assignées.

19. Procédé selon la revendication 17, dans lequel la programmation des transmissions vers lesdites stations mobiles via ledit canal de paquets de données partagé comprend de programmer deux ou plusieurs stations mobiles afin de recevoir des transmissions de paquets de données via ledit canal de paquets de données en même temps.

20. Procédé selon la revendication 19, comprenant en outre la sélection des antennes de secteur pour transmettre des données à chaque station mobile.

21. Procédé selon la revendication 20, dans lequel la sélection des antennes de secteur pour transmettre des données à chaque station mobile comprend de programmer chaque antenne de secteur de manière indépendante.

22. Procédé selon la revendication 20, dans lequel la sélection des antennes de secteur pour transmettre des données à chaque station mobile comprend la programmation conjointe desdites antennes de secteur.

23. Procédé selon la revendication 14, dans lequel la réassignation dynamique d'une antenne de secteur associée à un émetteur de secteur dans un premier secteur à un émetteur de secteur dans un second secteur comprend de déterminer une assignation d'antenne de secteur sur la base d'une charge de secteur.

24. Procédé selon la revendication 14, dans lequel la réassignation dynamique d'une antenne de secteur comprend de déterminer une assignation d'antenne de secteur sur la base des conditions de canal entre lesdites antennes de secteur et lesdites stations mobiles.

25. Procédé selon la revendication 24, dans lequel la détermination d'une assignation d'antenne de secteur sur la base des conditions de canal entre lesdites antennes de secteur et lesdites stations mobiles comprend de comparer les conditions de canal entre une antenne de secteur et des stations mobiles dans deux ou plusieurs secteurs.

26. procédé selon la revendication 25, dans lequel la réassignation dynamique d'une antenne de secteur comprend de réassigner une antenne de secteur associée à un émetteur de secteur dans un premier secteur à un émetteur de secteur dans un second secteur quand il est déterminé que les conditions de canal depuis l'antenne de secteur vers une station mobile dans le second secteur sont plus favorables que les conditions de canal d'une station mobile dans le premier secteur.
